# Europäisches Patentamt

# European Patent Office

# Office européen des brevets

(19)

(11) Veröffentlichungsnummer : **0 379 603 B1**

(12)

# EUROPÄISCHE PATENTSCHRIFT

(45) Veröffentlichungstag der Patentschrift :
**13.05.92 Patentblatt 92/20**

(51) Int. Cl.⁵ : **C04B 37/00, // C04B35/56**

(21) Anmeldenummer : **89101128.0**

(22) Anmeldetag : **23.01.89**

(54) **Verfahren zum stoffschlüssigen Verbinden von Werkstücken grosser Abmessungen aus siliciuminfiltriertem Siliciumcarbid durchelektrische Widerstandsheizung und Anordnung zur Durchführung des Verfahrens.**

(43) Veröffentlichungstag der Anmeldung :
**01.08.90 Patentblatt 90/31**

(45) Bekanntmachung des Hinweises auf die
Patenterteilung :
**13.05.92 Patentblatt 92/20**

(84) Benannte Vertragsstaaten :
**AT BE CH DE ES FR GB IT LI LU NL SE**

(56) Entgegenhaltungen :
**EP-A- 0 076 467**
**EP-A- 0 348 748**
**DE-A- 3 003 186**

(73) Patentinhaber : **SIEMENS AKTIENGESELLSCHAFT**
**Wittelsbacherplatz 2**
**W-8000 München 2 (DE)**

(72) Erfinder : **Jung, Jürgen, Dr.**
**Barbarastrasse 3**
**W-5060 Bergisch Gladbach 1 (DE)**
Erfinder : **Mittenbühler, Arnulf, Dr.**
**Welcherheide 34**
**W-5060 Bergisch Gladbach 1 (DE)**
Erfinder : **Turwitt, Martin, Dr.**
**Grossenbaumer Allee 291**
**W-4100 Duisburg 28 (DE)**

EP 0 379 603 B1

Jouve, 18, rue Saint-Denis, 75001 PARIS

## Beschreibung

Die vorliegende Erfindung betrifft ein Verfahren zum stoffschlüssigen Verbinden von Werkstücken großer Abmessungen aus siliciuminfiltriertem Siliciumcarbid (SiSiC), wobei die Werkstücke im Bereich der Verbindungsstelle von einer dicht schließenden Schale umgeben sind, der Zwischenraum zwischen der Schale und den Werkstücken unter Vakuum gehalten bzw. mit einem Inertgas oder reduzierenden Schutzgas gefüllt wird und die Verbindungsstelle örtlich erhitzt wird sowie eine Anordnung zur Durchführung des Verfahrens. Ein derartiges Verfahren ist aus der nicht vorveröffentlichten EP-A 0 348 748 bekannt, die auch auf den Namen der gegenwärtigen Anmelderin eingereicht wurde und die gemäß Art. 54 (3) EPÜ zum zu berücksichtigenden Stand der Technik gehört. Der Werkstoff SiSiC findet aufgrund seiner guten mechanischen und chemischen Eigenschaften zunehmend Beachtung. Verbindungen von mehreren Teilen aus diesem Werkstück werden sowohl in herkömmlich formschlüssiger Weise (z. B. durch Gewinde) hergestellt, die jedoch bei erhöhten Anforderungen an die Dichtigkeit der Verbindung nicht befriedigen, als auch stoffschlüssig, wozu besondere Lote, z. B. aus einer Titansiliciumlegierung entwickelt worden sind. Diese Löttechnik erfordert sowohl sehr hohe Temperaturen (von ca. 1400 °C) als auch die Durchführung unter Vakuum bzw. einem Inertgas. Diese Lötungen sind bislang in Lötöfen durchgeführt worden, die groß genug waren, um die beiden miteinander zu verbindenden Teile zusammen aufzunehmen. Aus praktischen Gründen ist jedoch die Größe dieser Lötöfen begrenzt, so daß sie z. B. nicht ausreicht, um Großkomponenten wie z. B. Wärmetauscher von ca. 10 m Länge und ca. 1 m Durchmesser aufzunehmen. Daher wurde in der oben angesprochenen Patentanmeldung vorgeschlagen, die zur Lötung erforderliche Temperatur und besondere Atmosphäre nur lokal im Bereich der Lötstelle selbst zu erzeugen. Zur Erhitzung der Lötstelle wurde dabei vorgeschlagen, daß ein Heizelement aus Wolfram, Iridium oder Molybdän auf die Lötstelle strahlt.

Aufgabe der vorliegenden Erfindung ist eine Abwandlung des beschriebenen Verfahrens, die es gestattet, die Beheizung der Lötstelle bei günstigerer Energieeinbringung vorzunehmen.

Die Lösung dieser Aufgabe erfolgt dadurch, daß die örtliche Erhitzung der Verbindungsstelle in mindestens einem der Werkstücke durch elektrische Wirbelströme erfolgt, die in mindestens einem der Werkstücke mittels stromdurchflossener und benachbarter Spulen induziert werden. Energieverluste an die Umwelt während des Lötvorganges werden so minimiert und zugleich die Herstellung einer die Verbindungsstelle umgebenden Schutzgasatmosphäre erleichtert, indem die zum Abschluß derselben dienenden Schalen bzw. Hüllen keine Durchbrüche aufweisen müssen, durch die eine von den Werkstücken selbst getrennte elektrische Widerstandsheizung mit Strom versorgt wird.

Dabei erscheint dies Verfahren gut geeignet für die Durchführung solcher Lötungen, bei der eine zeitlich ausgedehntere Auswirkung der hohen Temperatur gewünscht wird. Das nach dem 2. Anspruch ausgestaltete alternative Verfahren bietet sich demgegenüber für solche Fälle an, in denen nur eine geringe Menge des Lotes aufgeschmolzen werden muß, z. B. weil die genaue Passung der Werkstücke zueinander die Einhaltung eines sehr dünnen Lötspaltes gestattet.

Zur Durchführung des erfindungsgemäßen Verfahrens bei der oben als besonders wichtig ins Auge gefaßten Verwendung erscheint eine Anordnung besonders geeignet, wie sie im 3. Anspruch vorgeschlagen wird. Die Zufuhr des die Lötstelle abdeckenden Inertgases erfolgt dann durch das zu lötende Rohr selbst und die Abdeckung der Lötstelle an der außen gelegenen Seite erfolgt durch den (keramischen) Kitt, der zugleich größere Verluste an Inertgas verhindert.

Die weitere Ausgestaltung der Anordnung gemäß dem 4. Anspruch verlegt die die Heizung bewirkenden Induktionsspulen bzw. Kondensatoren außerhalb des unter Schutzgas stehenden Raumes, so daß sie ohne weiteres zugänglich sind und auch weitgehend der Einwirkung der in den Werkstücken erzeugten Wärme entzogen sind.

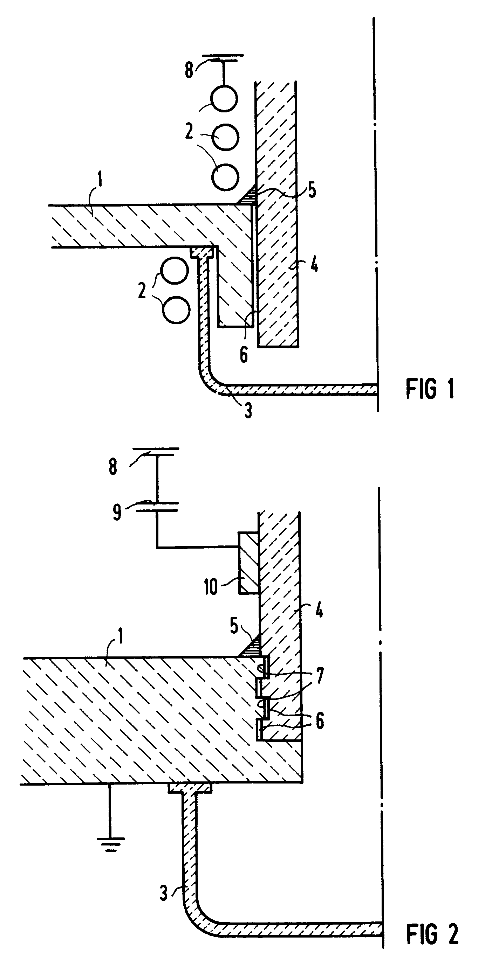

Zwei Ausführungsbeispiele der Erfindung sind schematisch in der Zeichnung dargestellt, und zwar im halben Längsaxialschnitt. Beiden Ausführungsformen gemeinsam ist ein erstes Werkstück 1, in diesem Falle der Rohrboden eines Wärmetauschers und ein dicht damit zu verbindendes Rohr 4, wobei beide Teile aus SiSiC hergestellt sind. Dabei kann das Rohr 4 in die entsprechende Öffnung im Rohrboden 1 einfach eingesteckt sein (Fig. 1) oder aber mittels eines Gewindes 7 eingeschraubt sein (Fig. 2). In beiden Fällen verbleibt zwischen den beiden Werkstücken ein Spalt 6, in den zuvor Lot eingelegt wurde, das nunmehr durch örtliche Erhitzung zum Schmelzen gebracht werden soll. An der rohrabgewandten Seite wird die zur Aufnahme des Rohres 4 bestimmte Öffnung im Rohrboden 1 mittels einer Kappe 3 (z. B. aus Quarz) abgeschlossen. Das im Inneren des Rohres 4 zugeführte Schutzgas, z. B. eine schwach reduzierende Mischung aus Argon und Wasserstoff, wird dadurch am Entweichen gehindert, daß an der Außenseite der Fügestelle keramischer Kitt 5 aufgetragen wird. Bei der in der Figur 1 dargestellten Anordnung erfolgt die örtliche Beheizung der Lötstelle durch in der Nähe derselben angeordnete Induktionsspulen 2, die durch eine Stromquelle 8 versorgt werden. Durch den in den Induktionsspulen 2 fließenden Strom werden sowohl im Rohrboden 1 als auch im Rohr 4 Wirbelströme induziert, die zu einer Aufheizung dieser Teile führen, wodurch das sie kontaktierende Lot im Spalt 6 verflüssigt wird. Bei der in der Figur 2 dargestellten Variante wird durch die Stromquelle 8 zunächst ein Kondensator 9 aufgeladen, der sich schließlich in einem Stromstoß entläd, der über einen metallischen Kontaktring 10 in zumindest eines der Werkstücke eingeleitet wird und ebenfalls zu dessen Aufheizung führt; wobei das andere Werkstück, z. B. die Keramikplatte, gut geerdet sein muß.

## Patentansprüche

1. Verfahren zum stoffschlüssigen Verbinden von Werkstücken (1, 4) großer Abmessungen aus siliciuminfiltriertem Siliciumcarbid, wobei die Werkstücke im Bereich der Verbindungsstelle (6) von einer dicht schließenden Schale (3) umgeben sind, der Zwischenraum zwischen der Schale (3) und den Werkstücken (1, 4) unter Vakuum gehalten bzw. mit einem Inertgas bzw. reduzierenden Schutzgas gefüllt wird und die Verbindungsstelle (6) örtlich erhitzt (2, 9) wird, **dadurch gekennzeichnet**, daß die örtliche Erhitzung durch Wirbelströme erfolgt, die in mindestens einem der Werkstücke (1, 4) mittels stromdurchflossener und benachbarter Spulen (2) induziert werden.

2. Verfahren zum stoffschlüssigen Verbinden von Werkstücken (1, 4) großer Abmessungen aus siliciuminfiltriertem Siliciumcarbid, wobei die Werkstücke im Bereich der Verbindungsstelle (6) von einer dicht schließenden Schale (3) umgeben sind, der Zwischenraum zwischen der Schale (3) und den Werkstücken (1, 4) unter Vakuum gehalten bzw. mit einem Inertgas bzw. reduzierenden Schutzgas gefüllt wird und die Verbindungsstelle (6) örtlich erhitzt (2, 9) wird, **dadurch gekennzeichnet**, daß die örtliche Erhitzung durch Ströme erfolgt, die durch die Entladung eines Kondensators (9) in mindestens eines der Werkstücke (1, 4) eingeleitet werden.

3. Anordnung zur Durchführung des Verfahrens nach Anspruch 1 oder 2 für das Fügen von Rohren (4) in Rohrböden (1), **dadurch gekennzeichnet**, daß Öffnungen in Rohrböden (1) auf der rohrabgewandten Seite mittels Kappen (3) und der Spalt zwischen Rohr und Rohrboden auf der rohrzugewandten Seite mit Kitt (5) verschlossen sind.

4. Anordnung nach Anspruch 3, **dadurch gekennzeichnet**, daß die Induktivitäten (2) bzw. Kapazitäten (9) außerhalb des durch die Kappen (3) begrenzten Raumes angeordnet sind.

## Claims

1. Process for the cohesive connection of silicon infiltrated silicon carbide workpieces (1, 4) of large dimensions, the workpieces being enclosed in the region of the joint (6) by a tightly closing shell (3), the intermediate space between the shell (3) and the workpieces (1, 4) being kept under vacuum or filled with an inert gas or reducing protective gas, and the joint (6) being locally heated (2, 9), characterised in that the local heating is effected by eddy currents which are induced in at least one of the workpieces (1, 4) by means of adjacent coils (2) which have current flowing through them.

2. Process for the cohesive connection of silicon infiltrated silicon carbide workpieces (1, 4) of large dimensions, the workpieces being enclosed in the region of the joint (6) by a tightly closing shell (3), the intermediate space between the shell (3) and the workpieces (1, 4) being kept under vacuum or filled with an inert gas or reducing protective gas, and the joint (6) being locally heated (2, 9), characterised in that the local heating is effected by currents which are initiated by the discharging of a capacitor (9) in at least one of the workpieces (1, 4).

3. Apparatus for carrying out the process according to claim 1 or 2 for joining tubes (4) to tube bases (1), characterised in that apertures in tube bases (1) on the side remote from the tube are closed by means of covers (3), and the gap between the tube and the tube base are sealed with cement (5) on the side facing the tube.

4. Apparatus according to claim 3, characterised in that the inductances (2) or capacitances (9) are arranged outside the area defined by the covers (3).

## Revendications

1. Procédé de liaison par coopération de matières de pièces (1, 4) de grandes dimensions en carbure de silicium infiltré par du silicium, qui consiste à entourer les pièces dans la région du point de liaison (6) d'une coquille (3) fermant de manière étanche, à maintenir l'espace intermédiaire compris entre la coquille (3) et les pièces (1, 4) sous vide ou à l'emplir d'un gaz inerte ou d'un gaz réducteur de protection et à chauffer (2, 9) localement le point de liaison (6), caractérisé en ce qu'il consiste à effectuer le chauffage local par des courants de Foucault, qui sont induits dans au moins l'une des pièces (1,4) au moyen de bobines (2) voisines et parcourues par le courant électrique,

2. Procédé de liaison par coopération de matières de pièces (1,4) de grandes dimensions en carbure de silicium infiltré par du silicium, qui consiste à entourer les pièces dans la région du point de liaison (6) d'une coquille (3) fermant de manière étanche, à maintenir l'espace intermédiaire compris entre la coquille (3) et les pièces (1,4) sous vide ou à l'emplir d'un gaz inerte ou d'un gaz réducteur de protection et à chauffer (2, 9) localement le point de liaison (6), caractérisé en ce qu'il consiste à effectuer le chauffage local par des courants électriques qui sont envoyés dans au moins l'une des pièces (1,4) par la décharge d'un condensateur (9).

3. Dispositif de mise en oeuvre du procédé suivant la revendication 1 ou 2, pour la jonction de tubes (4) dans des plaques tubulaires (1), caractérisé en ce que des ouvertures ménagées dans des plaques tubulaires (1) sont fermées, du côté éloigné des tubes, au moyen de coiffes (3), et l'intervalle compris entre le tube et la plaque tubulaire est fermé du côté tourné vers le tube par du mastic (5).

4. Dispositif suivant la revendication 3, caractérisé en ce que les inductances (2) ou les capacités (9) sont disposées en dehors de l'espace délimité par les coiffes (3).

FIG 1

FIG 2